# EUROPEAN PATENT SPECIFICATION

(11) **EP 4 609 259 B1**
(45) Date of publication and mention of the grant of the patent: **19.08.2026**
(21) Application number: 24708011.2
(22) Date of filing: 17.01.2024
(51) Int. Cl.: G02B 27/01

(54) **BATTERY WAVEGUIDE FOR AUGMENTED REALITY DISPLAY**
BATTERIEWELLENLEITER FÜR ANZEIGE DER ERWEITERTEN REALITÄT
GUIDE D'ONDES DE BATTERIE POUR AFFICHAGE À RÉALITÉ AUGMENTÉE

(30) Priority: 19.01.2023 US 202318098916
(43) Date of publication of application: 03.09.2025
(73) Proprietor: GOOGLE LLC, Mountain View CA 94043 (US)
(72) Inventor: LEE, Chen-Cheng, Taipei 110 (TW); LIAO, Pin-Ci, Taipei 110 (TW)
(74) Representative: Maikowski & Ninnemann Patentanwälte Partnerschaft mbB
(86) International application number: PCT/US2024/011854
(87) International publication number: WO 2024/155722

(56) References cited:
- CN-U- 206 946 103
- US-A1- 2016 103 322
- US-A1- 2019 057 957

## Description

### BACKGROUND

In the field of optics, an optical combiner is an optical apparatus that combines two light sources, for example, environmental light from outside of the optical combiner and light emitted from a micro-display that is directed to the optical combiner via a waveguide. Optical combiners are used in eyewear display systems, sometimes referred to as wearable heads up displays (WHUDs) or near-eye displays, which allow a user to view computer-generated content (e.g., text, images, or video content) superimposed over a user's environment viewed through the eyewear display system, creating what is known as augmented reality (AR) or mixed reality (MR). A comparable display system is disclosed in US 2016/103322 A1.

### SUMMARY OF EMBODIMENTS

A claimed solution is specified by a display system according to claim 1 and by a method according to claim 8. Dependent claims specify embodiments thereof. In a first embodiment, a display system includes a micro-display to generate display light and a waveguide including a substantially transparent battery configured to: receive the display light from the micro-display and transmit the display light from a proximal end of the waveguide to a distal end of the waveguide; and supply power to the micro-display. The waveguide further includes one of a transflective mirror and a diffraction structure disposed on a surface of the substantially transparent battery to couple the display light into or out of the substantially transparent battery.

The display system may further include a frame configured to carry a lens having an area, wherein the substantially transparent battery is disposed within the lens. In some embodiments, the substantially transparent battery comprises a majority of the area of the lens. The lens may comprise glass and the substantially transparent battery may be integrated with the glass. The frame may be further configured to carry a battery to supply power to the micro-display in conjunction with the substantially transparent battery.

In some embodiments, the substantially transparent battery is at least approximately 80% transparent. The substantially transparent battery may have an optical power of approximately zero.

**In** another embodiment, a method includes receiving display light from a micro-display at an incoupler of a waveguide; directing the display light from a proximal end of the waveguide to a distal end of the waveguide, wherein the waveguide comprises a substantially transparent battery and at least one of a transflective mirror and a diffraction structure disposed on a surface of the substantially transparent battery to couple the display light into or out of the substantially transparent battery; and directing at least a portion of the display light at an outcoupler disposed at the distal end of the waveguide out of the waveguide toward a user's eye.

The method may further include supplying power from the substantially transparent battery to the micro-display.

In some embodiments, the method further includes disposing the waveguide in a lens; and carrying the lens and a battery in a frame. The method may also include supplying power from the battery to the micro-display in conjunction with supplying power from the substantially transparent battery to the micro-display. The substantially transparent battery may be at least approximately 80% transparent. The substantially transparent battery may have an optical power of approximately zero.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of an eyewear display system including a substantially transparent battery that functions as a waveguide in accordance with some embodiments.
FIG. 2 is a block diagram of a projection system that projects light representing images onto the eye of a user via a substantially transparent battery waveguide with a transflective mirror in accordance with some embodiments.
FIG. 3 is a block diagram of a substantially transparent battery waveguide assembly with a diffraction structure in accordance with some embodiments.
FIG. 4 shows an example of light propagation within a substantially transparent battery waveguide of an eyewear display system in accordance with some embodiments.
FIG. 5 is a flow diagram illustrating a method of augmenting a power supply for an eyewear display system with a substantially transparent battery waveguide in accordance with some embodiments.

### DETAILED DESCRIPTION

In an eyewear display system, light beams from an image source are coupled into a light guide substrate, generally referred to as a waveguide or lightguide, by an input optical coupling referred to as an "incoupler", such as an incoupling optical grating, which can be formed on a surface, or multiple surfaces, of the substrate or disposed within the substrate. Once the light beams have been coupled into the waveguide, the light beams are "guided" through the substrate, typically by multiple instances of total internal reflection (TIR), to then be directed out of the waveguide by an output optical coupling (i.e., an "outcoupler"), which can also take the form of an optical grating. The light beams ejected from the waveguide overlap at an eye relief distance from the waveguide forming an exit pupil within which a virtual image generated by the image source can be viewed by the user of the eyewear display system.

A micro-display projects light toward the waveguide and is powered by an external power supply connected to the eyewear display system by a wire or by a battery, which is carried in a frame or neckband of the eyewear display system. A wireless power solution results in an enhanced user experience but suffers from a shorter battery life. Battery life increases with a larger volume of battery; however, a larger (and heavier) battery also detracts from the user experience.

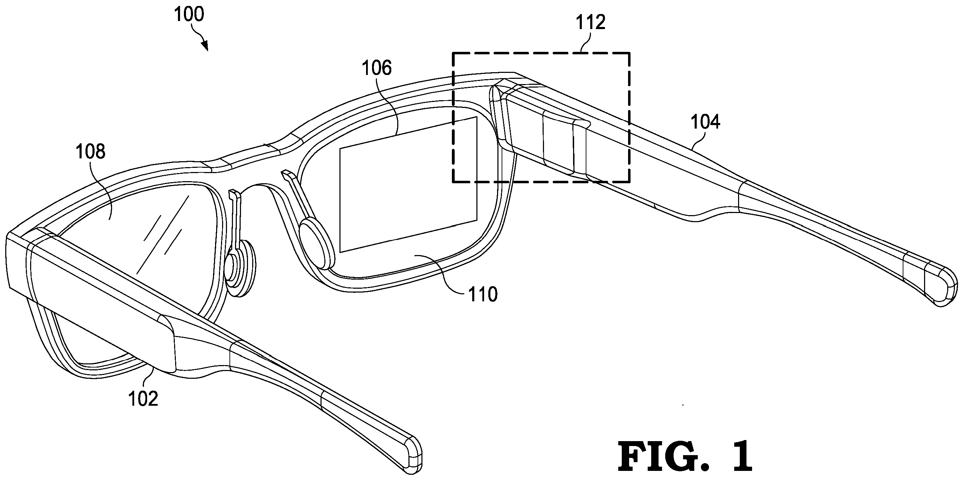

FIGs. 1-5 illustrate techniques for extending battery life of an eyewear display system by incorporating a substantially transparent battery into a lens portion of the eyewear display system to serve as a waveguide substrate. The substantially transparent battery waveguide receives display light from the micro-display and transmits the display light from a proximal end of the waveguide to a distal end of the waveguide while also supplying power to the micro-display. Either a transflective mirror or a diffraction structure is disposed on the surface of the substantially transparent battery to couple light into and out of the substantially transparent battery (i.e., to serve as the incoupler and outcoupler).

FIG. 1 illustrates an example eyewear display system 100 including a waveguide made from a substantially transparent battery in accordance with some embodiments. The eyewear display system 100 has a support structure 102 that includes an arm 104, which houses a micro-display (e.g., a laser projector, a micro-LED projector, a Liquid Crystal on Silicon (LCOS) projector, or the like). The micro-display is configured to project images toward the eye of a user via a curved or planar waveguide having a substantially transparent battery substrate, such that the user perceives the projected images as being displayed in a field of view (FOV) area 106 of a display at one or both of lens elements 108, 110. In the depicted embodiment, the eyewear display system 100 is a near-eye display system in the form of a WHUD in which the support structure 102 is configured to be worn on the head of a user and has a general shape and appearance (that is, form factor) of an eyeglasses (e.g., sunglasses) frame.

The support structure 102 contains or otherwise includes various components to facilitate the projection of such images toward the eye of the user, such as the micro-display and the substantially transparent battery waveguide. In some embodiments, the support structure 102 further includes various sensors, such as one or more front-facing cameras, rear-facing cameras, other light sensors, motion sensors, accelerometers, and the like. In some embodiments, the support structure 102 includes one or more radio frequency (RF) interfaces or other wireless interfaces, such as a Bluetooth(TM) interface, a WiFi interface, and the like. Further, in some embodiments, the support structure 102 further includes one or more batteries or other portable power sources for supplying power to the electrical components of the eyewear display system 100. In some embodiments, some or all of these components of the eyewear display system 100 are fully or partially contained within an inner volume of support structure 102, such as within the arm 104 in region 112 of the support structure 102. It should be noted that while an example form factor is depicted, it will be appreciated that in other embodiments the eyewear display system 100 may have a different shape and appearance from the eyeglasses frame depicted in FIG. 1. It should be understood that instances of the term "or" herein refer to the non-exclusive definition of "or", unless noted otherwise. For example, herein the phrase "X or Y" means "either X, or Y, or both".

One or both of the lens elements 108, 110 are used by the eyewear display system 100 to provide an augmented reality (AR) display in which rendered graphical content can be superimposed over or otherwise provided in conjunction with a real-world view as perceived by the user through the lens elements 108, 110. For example, a micro-display of the eyewear display system 100 uses light to form a perceptible image or series of images by projecting the display light onto the eye of the user via a projector of the micr-display, a substantially transparent battery waveguide formed at least partially in the corresponding lens element 108 or 110, and one or more optical elements (e.g., one or more scan mirrors, one or more optical relays, or one or more collimation lenses that are disposed between the projector and the substantially transparent battery waveguide or integrated with the transparent battery waveguide), according to various embodiments.

One or both of the lens elements 108, 110 includes at least a portion of a substantially transparent battery waveguide that routes display light received by an incoupler of the substantially transparent battery waveguide to an outcoupler of the substantially transparent battery waveguide, which outputs the display light toward an eye of a user of the eyewear display system 100. The display light is modulated and projected onto the eye of the user such that the user perceives the display light as an image. In addition, each of the lens elements 108, 110 is sufficiently transparent to allow a user to see through the lens elements to provide a field of view of the user's real-world environment such that the image appears superimposed over at least a portion of the real-world environment.

In some embodiments, the projector of the micro-display of the eyewear display system 100 is a digital light processing-based projector, a scanning laser projector, or any combination of a modulative light source, such as a laser or one or more light-emitting diodes (LEDs), and a dynamic reflector mechanism such as one or more dynamic scanners, reflective panels, or digital light processors (DLPs). In some embodiments, the projector includes a micro-display panel, such as a micro-LED display panel (e.g., a micro-AMOLED display panel, or a micro inorganic LED (i-LED) display panel) or a micro-Liquid Crystal Display (LCD) display panel (e.g., a Low Temperature PolySilicon (LTPS) LCD display panel, a High Temperature PolySilicon (HTPS) LCD display panel, or an In-Plane Switching (IPS) LCD display panel). In some embodiments, the projector includes a Liquid Crystal on Silicon (LCOS) display panel. In some embodiments, a display panel of the projector is configured to output light (representing an image or portion of an image for display) into the waveguide of the projector. The substantially transparent battery waveguide expands the display light and outputs the display light toward the eye of the user via an outcoupler.

The projector is communicatively coupled to the controller and a non-transitory processor-readable storage medium or memory storing processor-executable instructions and other data that, when executed by the controller, cause the controller to control the operation of the projector. In some embodiments, the controller controls the projector to selectively set the location and size of the FOV area 106. In some embodiments, the controller is communicatively coupled to one or more processors (not shown) that generate content to be displayed at the eyewear display system 100. The projector outputs display light toward the FOV area 106 of the eyewear display system 100 via the substantially transparent battery waveguide. In some embodiments, at least a portion of an outcoupler of the substantially transparent battery waveguide overlaps the FOV area 106. Herein, the range of different user eye positions that will be able to see the display is referred to as the eyebox of the display.

To augment the one or more batteries or other portable power sources for supplying power to the electrical components of the eyewear display system 100 carried in the support structure 102, the waveguide incorporates a substantially transparent battery that both directs light from the micro-display to a user's eye and supplies power to the micro-display and other components of the eyewear display system 100. In some embodiments, the substantially transparent battery includes a grid-structured electrode having a feature dimension that is below the resolution limit of the human eye, such that the electrode appears transparent. The substantially transparent battery is at least approximately 80% transparent in some embodiments and has an optical power of zero.

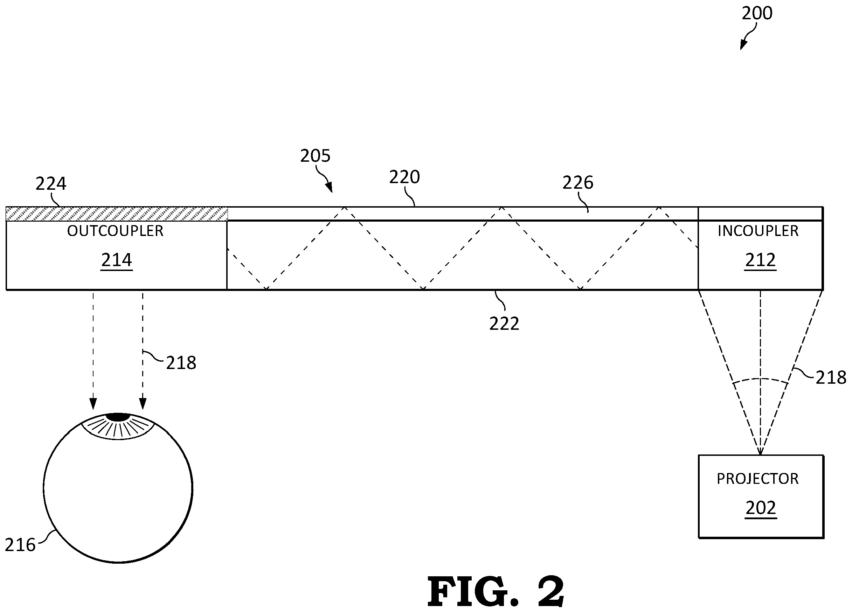

FIG. 2 illustrates a simplified block diagram of a projection system 200 of a micro-display that projects images directly onto the eye 216 of a user via a substantially transparent battery waveguide 205. The projection system 200 includes a projector 202 and the substantially transparent battery waveguide 205 having an incoupler 212 and outcoupler 214, with the outcoupler 214 being optically aligned with an eye 216 of a user in the present example. For example, the outcoupler 214 substantially overlaps with the FOV area 106 shown in FIG. 1. In some embodiments, the projection system 200 is implemented in a wearable heads-up display or other display system, such as the eyewear display system 100 of FIG. 1.

The projector 202 includes one or more light sources configured to generate and output display light 218 (e.g., visible light such as red, blue, and green light and, in some embodiments, non-visible light such as infrared light). In some embodiments, the projector 202 is coupled to a driver or other controller (not shown), which controls the timing of emission of display light from the light sources of the projector 202 in accordance with instructions received by the controller or driver from a computer processor coupled thereto to modulate the display light 218 to be perceived as images when output to the retina of an eye 216 of a user.

For example, during operation of the projection system 200, display light 218 beams are output by the light source(s) of the projector 202 and then directed into the transparent battery waveguide 205 before being directed to the eye 216 of the user. The substantially transparent battery waveguide 205 of the projection system 200 includes the incoupler 212 and the outcoupler 214. The term "waveguide," as used herein, will be understood to mean a combiner using one or more of total internal reflection (TIR), specialized filters, or reflective surfaces, to transfer light from an incoupler (such as the incoupler 212) to an outcoupler (such as the outcoupler 214). The substantially transparent battery waveguide 205 further includes two major surfaces 220 and 222, with major surface 220 being world-side (i.e., the surface farthest from the user) and major surface 222 being eye-side (i.e., the surface closest to the user). Although both major surface 220 and major surface 222 are depicted as planar in the illustrated example, in some embodiments, one or both of major surface 220 and major surface 222 is non-planar. In some embodiments, the substantially transparent battery waveguide 205 is between a world-side lens and an eye-side lens, which form lens elements 108, 110 shown in FIG. 1, for example. The substantially transparent battery waveguide 205 is integrated with one or both of the lens elements 108, 110, and comprises a majority of the lens elements 108, 110 in some embodiments.

In some embodiments, incoupler 212 and outcoupler 214 are located, at least partially, at major surface 220. In another embodiment, incoupler 212 and outcoupler 214 are located, at least partially, at major surface 222. In further embodiments, incoupler 212 is located at one of the major surfaces, while outcoupler 214 is located at the other of the major surfaces.

In some display applications, the light is a collimated image, and the substantially transparent battery waveguide 205 transfers and replicates the collimated image to the eye. In general, the terms "incoupler" and "outcoupler" will be understood to refer to any type of optical grating structure, including, but not limited to, diffraction gratings, holograms, holographic optical elements (e.g., optical elements using one or more holograms), volume diffraction gratings, volume holograms, surface relief diffraction gratings, or surface relief holograms. In some embodiments, a given incoupler or outcoupler is configured as a transmissive grating (e.g., a transmissive diffraction grating or a transmissive holographic grating) that causes the incoupler or outcoupler to transmit light and to apply designed optical function(s) to the light during the transmission. In some embodiments, a given incoupler or outcoupler is a reflective grating (e.g., a reflective diffraction grating or a reflective holographic grating) that causes the incoupler or outcoupler to reflect light and to apply designed optical function(s) to the light during the reflection. In the present example, the light 218 received at the incoupler 212 is relayed to the outcoupler 214 via the substantially transparent battery waveguide 205 using TIR. At least a portion of the display light 218 is then output to the eye 216 of a user via the outcoupler 214.

In some embodiments, the outcoupler 214 is formed by adhering a transflective mirror 224 to at least a portion of the major surface 220 of the substantially transparent battery waveguide 205. The transflective mirror 224 is substantially transparent to environmental light entering the major surface 220 of the substantially transparent battery waveguide 205 and is substantially reflective to display light experiencing TIR within the substantially transparent battery waveguide 205 to direct the display light out of the substantially transparent battery waveguide 205 through a transparent portion of the major surface 222. In the illustrated example, a plastic layer 226 covers the major surface 220 of the substantially transparent battery waveguide 205. In some embodiments, at least a portion of a reflective structure (e.g., the transflective mirror 224) is processed on the plastic layer 226. Forming the transflective mirror 224 on the plastic layer 226 ensures a consistency of appearance and thickness of the substantially transparent battery waveguide 205. In some embodiments, the incoupler 212 is also formed using a transflective mirror such as transflective mirror 224. In other embodiments, the incoupler 212 is formed from any appropriate optical element using diffractive or geometric optics to achieve incoupling of display light 218 from the projector 202. As described above, in some embodiments the substantially transparent battery waveguide 205 is implemented in an optical combiner as part of an eyeglass lens, such as the lens element 108, 110 (FIG. 1) of the display system having an eyeglass form factor and employing projection system 200.

Although not shown in the example of FIG. 2, in some embodiments additional optical components are included in any of the optical paths between the projector 202 and the incoupler 212, between the incoupler 212 and the outcoupler 214, or between the outcoupler 214 and the eye 216 (e.g., in order to shape the light for viewing by the eye 216 of the user). In some embodiments, a prism (not shown) is used to steer light from the projector 202 into the incoupler 212 so that light is coupled into incoupler 212 at the appropriate angle(s) to encourage propagation of the light in the substantially transparent battery waveguide 205 by TIR. Also, in some embodiments, an exit pupil expander, such as a fold grating, is arranged in an intermediate stage between incoupler 212 and outcoupler 214 to receive light that is coupled into the substantially transparent battery waveguide 205 by the incoupler 212, expand the light, and redirect the light towards the outcoupler 214, where the outcoupler 214 then couples the light out of the substantially transparent battery waveguide 205.

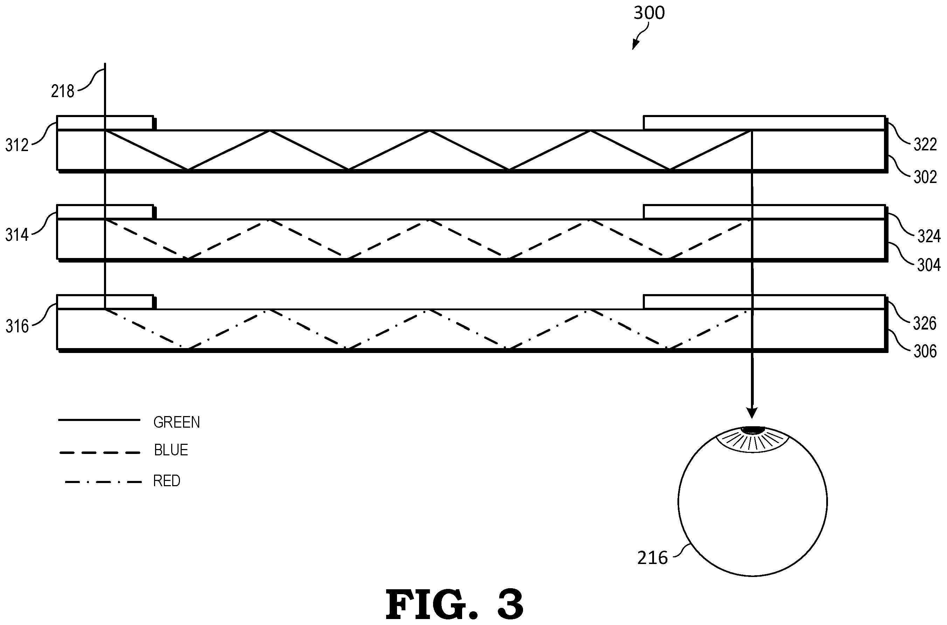

FIG. 3 shows a block diagram of a substantially transparent battery waveguide assembly 300 with a diffraction structure in accordance with some embodiments. Because diffractive gratings are dispersive, a grating with high efficiency for one part of the color frequency spectrum (e.g., blue light) often has low efficiency for another part of the color frequency spectrum (e.g., red light). To address the differences in efficiency, in some embodiments using a diffraction structure, the transparent battery waveguide assembly 300 employs a multi-waveguide architecture in which each color of light is separately guided into a different waveguide in a stack. Taken together, the stack of waveguides combines the light into a full color display.

In the illustrated example, the transparent battery waveguide assembly 300 includes a separate substantially transparent battery waveguide for each of red, blue, and green wavelengths. A first substantially transparent battery waveguide 302 includes a first diffractive optical film 312 and a second diffractive optical film 322 adhered to a surface of the first substantially transparent battery waveguide 302. The first diffractive optical film 312 serves as an incoupler to couple green display light 218 into the first substantially transparent battery waveguide 302. Once inside the first substantially transparent battery waveguide 302, the display light 218 experiences TIR as the display light 218 travels through the first substantially transparent battery waveguide 302. When the display light 218 interacts with the second diffractive optical film 322, the second diffractive optical film 322 directs the green display light 218 out of the first substantially transparent battery waveguide 302 toward the user's eye 216.

A second substantially transparent battery waveguide 304 includes a first diffractive optical film 314 and a second diffractive optical film 324 adhered to a surface of the second substantially transparent battery waveguide 304 that serve as an incoupler and outcoupler, respectively, to couple blue display light 218 into and out of the second substantially transparent battery waveguide 304. Once inside the second substantially transparent battery waveguide 304, the display light 218 experiences TIR as the display light 218 travels through the second substantially transparent battery waveguide 304. When the display light 218 interacts with the second diffractive optical film 324, the second diffractive optical film 324 directs the blue display light 218 out of the second substantially transparent battery waveguide 304 toward the user's eye 216.

A third substantially transparent battery waveguide 306 includes a first diffractive optical film 316 and a second diffractive optical film 326 adhered to a surface of the third substantially transparent battery waveguide 306 that serve as an incoupler and outcoupler, respectively, to couple red display light 218 into and out of the third substantially transparent battery waveguide 306. Once inside the third substantially transparent battery waveguide 306, the display light 218 experiences TIR as the display light 218 travels through the third substantially transparent battery waveguide 306. When the display light 218 interacts with the second diffractive optical film 326, the second diffractive optical film 326 directs the red display light 218 out of the third substantially transparent battery waveguide 306 toward the user's eye 216.

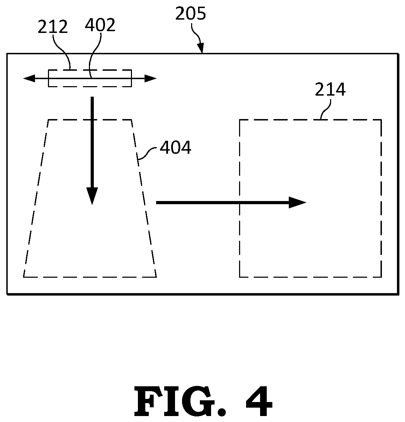

FIG. 4 shows an example of light propagation within the substantially transparent battery waveguide 205 of the projection system 200 of FIG. 2 in accordance with some embodiments. As shown, light received via the incoupler 212, which is scanned along the axis 402, is directed into an exit pupil expander (EPE) 404 and is then routed to the outcoupler 214 to be output (e.g., toward the eye of the user). In some embodiments, the exit pupil expander 404 expands one or more dimensions of the eyebox of the eyewear display system 100 that includes the projection system 200 (e.g., with respect to what the dimensions of the eyebox of the eyewear display system would be without the exit pupil expander 404). In some embodiments, the incoupler 212 and the exit pupil expander 304 each include respective one-dimensional diffraction structures (i.e., diffraction gratings that extend along one dimension), for example, in a diffractive optical film disposed on a surface of the transparent battery waveguide 205. It should be understood that FIG. 4 shows a case in which the incoupler 212 directs light straight down (with respect to the presently illustrated view) in a first direction that is perpendicular to the scanning axis 402, and the exit pupil expander 404 directs light to the right (with respect to the presently illustrated view) in a second direction that is perpendicular to the first direction. While not shown in the present example, it should be understood that, in some embodiments, the first direction in which the incoupler 212 directs light is slightly or substantially diagonal, rather than exactly perpendicular, with respect to the scanning axis 402.

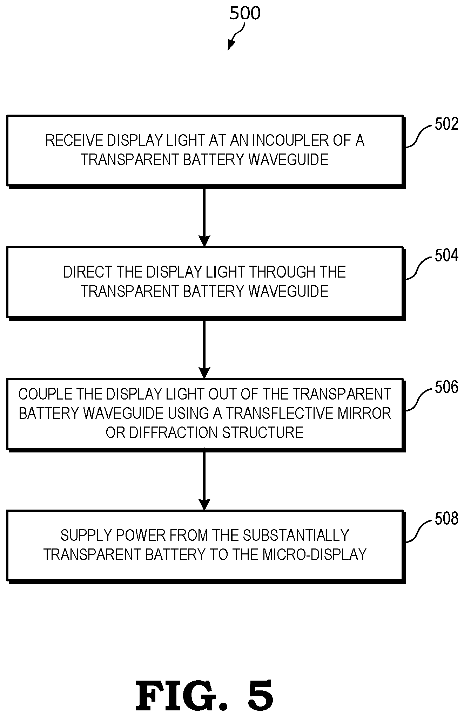

FIG. 5 illustrates a method 500 of augmenting a power supply for an eyewear display system with a substantially transparent battery waveguide in accordance with some embodiments. In some embodiments, the method 500 is performed by an eyewear display system such as those illustrated in FIGs. 1-4.

At block 502, an incoupler 212 of the substantially transparent battery waveguide 205 receives display light 218 from the micro-display projector 202. In some embodiments, the incoupler 212 is formed from a diffractive structure such as one of the diffractive optical films 312, 314, 316. At block 504, the display light 218 is directed through the substantially transparent battery waveguide from a proximal end to a distal end via TIR.

At block 506, an outcoupler 214 couples the display light 218 out of the substantially transparent battery waveguide 205. In some embodiments, the outcoupler 214 is formed from a transflective mirror 224. In other embodiments, the outcoupler is formed from a diffraction structure such as one of the diffractive optical films 322, 324, 326.

At block 508, the substantially transparent battery waveguide 205 supplies power to the micro-display. In some embodiments, the substantially transparent battery waveguide 205 augments power supplied by a battery carried in the arm 104 in region 112 of the support structure 102 of the eyewear display system 100.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A display system, comprising:
a micro-display (202) to generate display light (218); and
a waveguide (205; 302, 304, 306) comprising:
a substantially transparent battery configured to:
receive the display light (218) from the micro-display (202) and transmit the display light (218) from a proximal end of the waveguide (205; 302, 304, 306) to a distal end of the waveguide (205; 302, 304, 306); and
supply power to the micro-display (202); and
one of a transflective mirror (224) or a diffraction structure disposed on a surface (220) of the substantially transparent battery to couple the display light (218) into or out of the substantially transparent battery.

2. The display system of claim 1, further comprising:
a frame configured to carry a lens (108, 110) having an area, wherein the substantially transparent battery is disposed within the lens (108, 110).

3. The display system of claim 2, wherein the substantially transparent battery comprises a majority of the area of the lens (108, 110).

4. The display system of claim 2 or claim 3, wherein the lens (108, 110) comprises glass and the substantially transparent battery is integrated with the glass.

5. The display system of any of claims 2 to 4, wherein the frame is further configured to carry a battery to supply power to the micro-display (202) in conjunction with the substantially transparent battery.

6. The display system of any of claims 1 to 5, wherein the substantially transparent battery is at least approximately 80% transparent.

7. The display system of any of claims 1 to 6, wherein the substantially transparent battery has an optical power of approximately zero.

8. A method, comprising:
receiving display light (218) from a micro-display (202) at an incoupler (212) of a waveguide (205; 302, 304, 306);
directing the display light (218) from a proximal end of the waveguide (205; 302, 304, 306) to a distal end of the waveguide (205; 302, 304, 306), wherein the waveguide (205; 302, 304, 306) comprises a substantially transparent battery and at least one of a transflective mirror (224) or a diffraction structure disposed on a surface (220) of the substantially transparent battery to couple the display light (218) into or out of the substantially transparent battery; and
directing at least a portion of the display light (218) at an outcoupler (214) disposed at the distal end of the waveguide (205; 302, 304, 306) out of the waveguide (218) toward a user's eye (216).

9. The method of claim 8, further comprising:
supplying power from the substantially transparent battery to the micro-display (202).

10. The method of claim 8 or claim 9, further comprising:
disposing the waveguide (205; 302, 304, 306) in a lens (108, 110); and
carrying the lens (108, 110) and a battery in a frame.

11. The method of claim 10, further comprising:
supplying power from the battery to the micro-display (202) in conjunction with supplying power from the substantially transparent battery to the micro-display (202).

12. The method of any of claims 8 to 11, wherein the substantially transparent battery is at least approximately 80% transparent.

13. The method of any of claims 8 to 12, wherein the substantially transparent battery has an optical power of approximately zero.

## Patentansprüche

1. Anzeigesystem, umfassend:
ein Mikro-Display (202) zum Generieren von Anzeigelicht (218); und
einen Wellenleiter (205; 302, 304, 306), umfassend:
eine im Wesentlichen transparente Batterie, die konfiguriert ist zum:
Empfangen des Anzeigelichts (218) von dem Mikro-Display (202) und Übertragen des Anzeigelichts (218) von einem proximalen Ende des Wellenleiters (205; 302, 304, 306) zu einem distalen Ende des Wellenleiters (205; 302, 304, 306); und
Versorgen des Mikro-Displays (202) mit Strom; und
eines von einem transflektiven Spiegel (224) oder einer Beugungsstruktur, der beziehungsweise die auf einer Oberfläche (220) der im Wesentlichen transparenten Batterie angeordnet ist, um das Anzeigelicht (218) in die oder aus der im Wesentlichen transparenten Batterie ein- oder auszukoppeln.

2. Anzeigesystem nach Anspruch 1, ferner umfassend:
ein Gestell, das konfiguriert ist, um eine Linse (108, 110) zu tragen, die eine Fläche aufweist, wobei die im Wesentlichen transparente Batterie innerhalb der Linse (108, 110) angeordnet ist.

3. Anzeigesystem nach Anspruch 2, wobei die im Wesentlichen transparente Batterie einen Großteil der Fläche der Linse (108, 110) ausmacht.

4. Anzeigesystem nach Anspruch 2 oder Anspruch 3, wobei die Linse (108, 110) Glas umfasst und die im Wesentlichen transparente Batterie in das Glas integriert ist.

5. Anzeigesystem nach einem der Ansprüche 2 bis 4, wobei das Gestell ferner konfiguriert ist, um eine Batterie zu tragen, um das Mikro-Display (202) in Verbindung mit der im Wesentlichen transparenten Batterie mit Strom zu versorgen.

6. Anzeigesystem nach einem der Ansprüche 1 bis 5, wobei die im Wesentlichen transparente Batterie mindestens ungefähr 80 % transparent ist.

7. Anzeigesystem nach einem der Ansprüche 1 bis 6, wobei die im Wesentlichen transparente Batterie eine Brechkraft von ungefähr Null aufweist.

8. Verfahren, umfassend:
Empfangen von Anzeigelicht (218) von einem Mikro-Display (202) an einem Einkoppler (212) eines Wellenleiters (205; 302, 304, 306);
Lenken des Anzeigelichts (218) von einem proximalen Ende des Wellenleiters (205; 302, 304, 306) zu einem distalen Ende des Wellenleiters (205; 302, 304, 306), wobei der Wellenleiter (205; 302, 304, 306) eine im Wesentlichen transparente Batterie und mindestens eines von einem transflektiven Spiegel (224) oder einer Beugungsstruktur umfasst, der beziehungsweise die auf einer Oberfläche (220) der im Wesentlichen transparenten Batterie angeordnet ist, um das Anzeigelicht (218) in die oder aus der im Wesentlichen transparenten Batterie ein- oder auszukoppeln; und
Lenken mindestens eines Teils des Anzeigelichts (218) an einem Auskoppler (214), der an dem distalen Ende des Wellenleiters (205; 302, 304, 306) angeordnet ist, aus dem Wellenleiter (218) heraus in Richtung eines Auges (216) eines Benutzers.

9. Verfahren nach Anspruch 8, ferner umfassend:
Liefern von Strom von der im Wesentlichen transparenten Batterie an das Mikro-Display (202).

10. Verfahren nach Anspruch 8 oder Anspruch 9, ferner umfassend:
Anordnen des Wellenleiters (205; 302, 304, 306) in einer Linse (108, 110); und
Tragen der Linse (108, 110) und einer Batterie in einem Gestell.

11. Verfahren nach Anspruch 10, ferner umfassend:
Liefern von Strom von der Batterie an das Mikro-Display (202) in Verbindung mit dem Liefern von Strom von der im Wesentlichen transparenten Batterie an das Mikro-Display (202).

12. Verfahren nach einem der Ansprüche 8 bis 11, wobei die im Wesentlichen transparente Batterie mindestens ungefähr 80 % transparent ist.

13. Verfahren nach einem der Ansprüche 8 bis 12, wobei die im Wesentlichen transparente Batterie eine Brechkraft von ungefähr Null aufweist.

## Revendications

1. Système d'affichage, comprenant :
un micro-affichage (202) pour générer de la lumière d'affichage (218) ; et
un guide d'ondes (205 ; 302, 304, 306) comprenant :
une batterie sensiblement transparente configurée pour :
recevoir la lumière d'affichage (218) provenant du micro-affichage (202) et transmettre la lumière d'affichage (218) d'une extrémité proximale du guide d'ondes (205 ; 302, 304, 306) à une extrémité distale du guide d'ondes (205 ; 302, 304, 306) ; et
alimenter le micro-affichage (202) ; et
l'un d'un miroir transflectif (224) ou d'une structure de diffraction disposée sur une surface (220) de la batterie sensiblement transparente pour coupler la lumière d'affichage (218) à l'intérieur ou à l'extérieur de la batterie sensiblement transparente.

2. Système d'affichage selon la revendication 1, comprenant en outre :
un cadre configuré pour loger une lentille (108, 110) ayant une surface, dans lequel la batterie sensiblement transparente est disposée au sein de la lentille (108, 110).

3. Système d'affichage selon la revendication 2, dans lequel la batterie sensiblement transparente comprend une majorité de la surface de la lentille (108, 110).

4. Système d'affichage selon la revendication 2 ou la revendication 3, dans lequel la lentille (108, 110) comprend du verre et la batterie sensiblement transparente est intégrée au verre.

5. Système d'affichage selon l'une quelconque des revendications 2 à 4, dans lequel le cadre est en outre configuré pour loger une batterie afin d'alimenter le micro-affichage (202) en conjonction avec la batterie sensiblement transparente.

6. Système d'affichage selon l'une quelconque des revendications 1 à 5, dans lequel la batterie sensiblement transparente est transparente à au moins environ 80 %.

7. Système d'affichage selon l'une quelconque des revendications 1 à 6, dans lequel la batterie sensiblement transparente a une puissance optique d'environ zéro.

8. Procédé, comprenant :
la réception de la lumière d'affichage (218) provenant d'un micro-affichage (202) au niveau d'un coupleur d'entrée (212) d'un guide d'ondes (205 ; 302, 304, 306) ;
la direction de la lumière d'affichage (218) d'une extrémité proximale du guide d'ondes (205 ; 302, 304, 306) vers une extrémité distale du guide d'ondes (205 ; 302, 304, 306), dans lequel le guide d'ondes (205 ; 302, 304, 306) comprend une batterie sensiblement transparente et au moins l'un d'un miroir transflectif (224) ou d'une structure de diffraction disposée sur une surface (220) de la batterie sensiblement transparente pour coupler la lumière d'affichage (218) à l'intérieur ou à l'extérieur de la batterie sensiblement transparente ; et
la direction d'au moins une partie de la lumière d'affichage (218) vers un coupleur de sortie (214) disposé à l'extrémité distale du guide d'ondes (205 ; 302, 304, 306) à l'extérieur du guide d'ondes (218) vers l'œil de l'utilisateur (216).

9. Procédé selon la revendication 8, comprenant en outre :
l'alimentation du micro-affichage (202) à partir de la batterie sensiblement transparente.

10. Procédé selon la revendication 8 ou la revendication 9, comprenant en outre :
la disposition du guide d'ondes (205 ; 302, 304, 306) dans une lentille (108, 110) ; et
le logement de l'objectif (108, 110) et d'une batterie dans un cadre.

11. Procédé selon la revendication 10, comprenant en outre :
l'alimentation du micro-affichage (202) à partir de la batterie en conjonction avec l'alimentation du micro-affichage (202) à partir de la batterie sensiblement transparente.

12. Procédé selon l'une quelconque des revendications 8 à 11, dans lequel la batterie sensiblement transparente est transparente à au moins environ 80 %.

13. Procédé selon l'une quelconque des revendications 8 à 12, dans lequel la batterie sensiblement transparente a une puissance optique d'environ zéro.
